# EUROPÄISCHE PATENTANMELDUNG

(11) **EP 1 496 007 A1**
(43) Veröffentlichungstag der Anmeldung: **12.01.2005**
(21) Anmeldenummer: 04015600.2
(22) Anmeldetag: 02.07.2004
(51) Int. Cl.: B66F 9/075, B60H 1/02

(54) **Flurförderzeug mit einem elektrischen Antrieb, einem Brennstoffzellensystem und einer Heizvorrichtung für einen Bedienplatz**

(30) Priorität: 08.07.2003 DE 10330816
(71) Anmelder: STILL GMBH, D-22113 Hamburg (DE)
(72) Erfinder: Günther, Lars, 68159 Mannheim (DE); Leifert, Torsten, Dr., 21360 Vögelsen (DE)
(74) Vertreter: Lang, Michael

(57) **Zusammenfassung**

Die Erfindung betrifft ein Flurförderzeug mit einem elektrischen Antrieb (6), einem Brennstoffzellensystem (1) und einer Heizvorrichtung für einen Bedienplatz. Die Heizvorrichtung ist durch die beim Betrieb des Brennstoffzellensystems (1) entstehende Wärme betreibbar.

## Beschreibung

Die Erfindung betrifft ein Flurförderzeug mit einem elektrischen Antrieb, einem Brennstoffzellensystem und einer Heizvorrichtung für einen Bedienplatz. Flurförderzeuge dienen dem innerbetrieblichen Warentransport. Beim Einsatz vorwiegend in geschlossenen Räumen werden aufgrund der Emissionsfreiheit zumeist Flurförderzeuge mit elektrischen Antrieben verwendet. Insbesondere aufgrund des guten Wirkungsgrades gewinnt dabei der Einsatz von Brennstoffzellen als Energiequelle für den Antrieb von Flurförderzeugen zunehmende Bedeutung.

Bei einem Einsatz in kalter Umgebung, beispielsweise in einem Kühlhaus oder im Freien, sind bei vielen Flurförderzeugen Heizvorrichtungen für den Bedienplatz installiert. Diese beheizen beispielsweise eine komplette Fahrerkabine oder auch nur einzelne Elemente, mit denen die Bedienperson beim Betrieb des Flurförderzeugs in Kontakt kommt, wie beispielsweise Bedienelemente, insbesondere Lenkräder oder - deichseln, Haltegriffe und Fahrersitze. Insbesondere für Flurförderzeuge mit Batteriebetrieb finden dazu seit langem elektrische Systeme nach dem Widerstandsprinzip Verwendung, die daher kostengünstig verfügbar sind. Nachteilig bei diesen Systemen ist der hohe Energieverbrauch. Dadurch ergibt sich eine reduzierte Betriebszeit sowie lange Standzeiten zum Ergänzen der Energievorräte.

Der Erfindung liegt daher die Aufgabe zugrunde, ein Flurförderzeug mit einem elektrischen Antrieb und einem Brennstoffzellensystem zu schaffen, das über eine geeignete Heizvorrichtung mit niedrigem Energieverbrauch für einen Bedienplatz verfügt.

Diese Aufgabe wird erfindungsgemäß dadurch gelöst, dass die Heizvorrichtung durch die beim Betrieb des Brennstoffzellensystems entstehende Wärme betreibbar ist. Die Abwärme des Brennstoffzellensystems entweicht üblicherweise ungenutzt beziehungsweise wird sogar gezielt durch einen Kühlkreislauf abgeführt. Durch den Betrieb der Heizvorrichtung mit der Abwärme des Brennstoffzellensystems entfallen aufwändige elektrische Heizvorrichtungen, die zusätzliche Energie verbrauchen.

In einer vorteilhaften Ausbildung der Erfindung wird als Wärme übertragendes Medium eine Flüssigkeit, insbesondere Wasser, verwendet. Kühlsysteme für Brennstoffzellen nach dem Stand der Technik basieren häufig auf Flüssigkeitskühlung, insbesondere mit Wasser. Eine Heizvorrichtung kann mit geringem Aufwand in das System integriert werden.

Es ist weiterhin von besonderem Vorteil, wenn als Wärme übertragendes Medium ein Gas, insbesondere Luft, verwendet wird. Insbesondere bei der Beheizung von geschlossenenen Kabinen ist das Einblasen von warmer Luft ein Verfahren, das einen guten Wärmetransfer gewährleistet.

In einer weiteren Ausbildung wird als Wärme übertragendes Medium das Abgas der Brennstoffzelle verwendet. Das Abgas ist ebenfalls erwärmt und kann somit zur Übertragung von Heizleistung genutzt werden.

Es ist weiterhin vorteilhaft, wenn mindestens ein Bedienplatz durch die Heizvorrichtung beheizbar ist. Der Bedienplatz ist der Bereich des Fluförderzeugs, wo sich die Bedienperson bevorzugt aufhält. An diesem sollte daher eine für die Bedienperson möglichst angenehme Temperatur einstellbar sein.

Vorteilhafterweise ist mindestens ein Bedienelement, insbesondere eine Lenkvorrichtung, beheizbar. Bedienelemente werden von der Bedienperson direkt und oft mit ungeschützten Händen angefasst und sollten daher eine angenehme Temperatur aufweisen.

Zweckmäßigerweise ist mindestens ein Fahrersitz beheizbar. Dadurch kann auch bei offenen Bedienplätzen, wie sie bei häufigem Ein- und Aussteigen der Bedienperson vorteilhaft sind, ein für die Bedienperson angenehmes Temperaturgefühl geschaffen werden.

In einer weiteren vorteilhaften Ausbildung ist der Bedienplatz als Fahrerkabine ausgebildet. Beim Betrieb des FlurFörderzeugs vorwiegend in kalter Umgebung ist so der Bedienplatz gegenüber der kalten Umgebung besser abgeschirmt und es wird weniger Heizleistung benötigt. Bei einer kurzzeitigen Abschaltung der Brennstoffzelle bleibt die für die Bedienperson angenehme Temperatur hinreichend lange erhalten.

Weitere Vorteile und Einzelheiten der Erfindung werden anhand des in den schematischen Figuren dargestellten Ausführungsbeispiels näher erläutert. Dabei zeigt
- Figur 1: den prinzipiellen Aufbau der Energieversorgung eines erfindungsgemäßen Flurförderzeugs mit einem Warmluftgebläse,
- Figur 2: den prinzipiellen Aufbau der Energieversorgung eines erfindungsgemäßen Flurförderzeugs mit Warmwasserheizung.

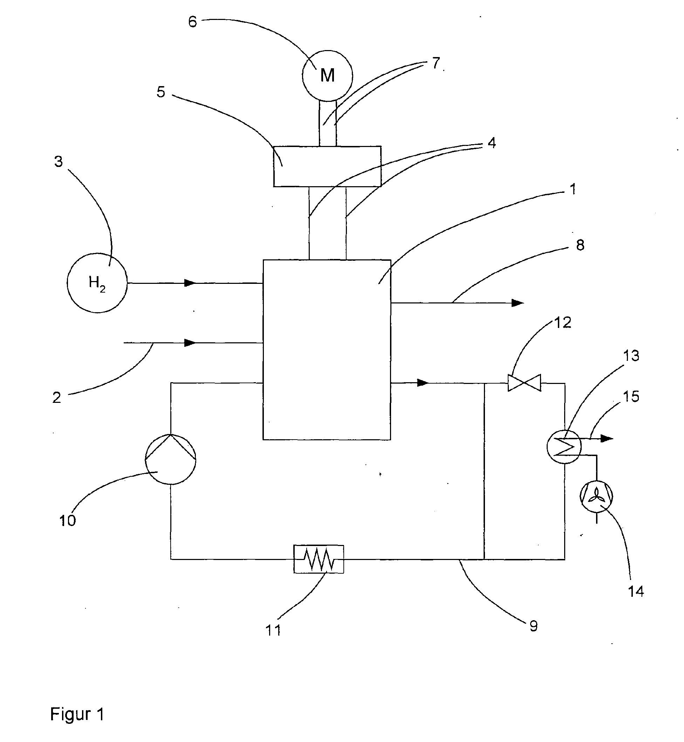

In Figur 1 ist der prinzipiellen Aufbau der Energieversorgung eines erfindungsgemäßen Flurförderzeugs mit einem Warmluftgebläse dargestellt. Ein Brennstoffzellensystem 1 wird über eine Zuleitung 2 mit Umgebungsluft versorgt. Als Brennstoff wird Wasserstoff aus einem Behälter 3 zugeführt. Der im Brennstoffzellensystem erzeugte Strom wird über die Leitungen 4 zu einer elektrischen Steuerungseinheit 5 geführt, von der aus die einzelnen Verbraucher, im dargestellten Beispiel repräsentiert durch einen elektrischen Antriebsmotor 6, über die Leitungen7 mit elektrischer Energie versorgt werden. Beim Betrieb des Brennstoffzellensystems 1 wird in der zugeführten Umgebungsluft enthaltener Sauerstoff mit dem aus dem Behälter 3 zugeführten Wasserstoff in Wasser umgesetzt. Dieses ist als Wasserdampf in der Abluft enthalten, die über die Leitung 8 an die Umgebung abgeführt wird. Das Brennstoffzellensystem 1 wird durch einen Kühlkreislauf 9 gekühlt, bei dem eine Pumpe 10 Wasser durch das Brennstoffzellensystem 1 fördert. Die vom Kühlwasser aufgenommene Wärme wird über den Kühler 11 an die Umgebung abgegeben. Über ein Ventil 12 ist ein Wärmetauscher 13 an den Kühlkreislauf angebunden, dem von einem Lüftergebläse 14 Luft zugeführt wird Die erwärmte Luft wird über eine Leitung 15 zum hier nicht dargestellten Bedienplatz geleitet. Als Bedienplatz ist hierbei der Bereich des Flurförderzeugs oder in unmittelbarer Nähe des Flurförderzeugs zu sehen, in dem sich eine Bedienperson beim Betrieb des Flurförderzeugs zur Bedienung von Funktionen des Flurförderzeugs aufhält. Dies kann beispielsweise eine geschlossene oder offene Kabine mit einem Fahrersitz sein, eine Standplattform oder der Bereich, von dem aus die Deichsel eines Hubwagens bedient werden kann.

Die Regelung der Heizleistung erfolgt über die Menge des dem Wärmetauscher 13 zugeführten Kühlwassers, die über das Ventil 12 geregelt wird, sowie über die Menge der vom Lüftergebläse 14 geförderten Luft. Diese Regelung kann nach dem Stand der Technik für flüssigkeitsversorgte Heizlüftungen automatisch oder durch eine Vorwahl der Heizleistung durch die Bedienperson erfolgen.

Die erwärmte Luft kann beim Bedienplatz durch Auslassöffnungen ausströmen und so beispielsweise zur Beheizung einer Fahrerkabine dienen, sie kann aber auch durch Bedienelemente oder in einen Fahrersitz geführt werden, um diese zu erwärmen. Dies ist insbesondere bei Fahrzeugen mit offenem Bedienplatz vorteilhaft.

Bei mit Wasserstoff betriebenen Brennstoffzellensystemen besteht das Abgas im Wesentlichen aus mit Wasserdampf angereicherter erwärmter Luft mit reduziertem Sauerstoffgehalt. Diese kann bei Fahrerplätzen mit ausreichender Luftzirkulation entweder direkt oder vermischt mit Umgebungsluft zur Beheizung über Luftauslassöffnungen verwendet werden. Auch die Leitung des Abgasstroms durch einen Fahrersitz oder Bedienelemente ist denkbar. Die Temperaturregelung wird dabei nach dem Stand der Technik beispielsweise über die Mengenregelung des Luftstroms oder durch Beimischung kühler Außenluft vorgenommen.

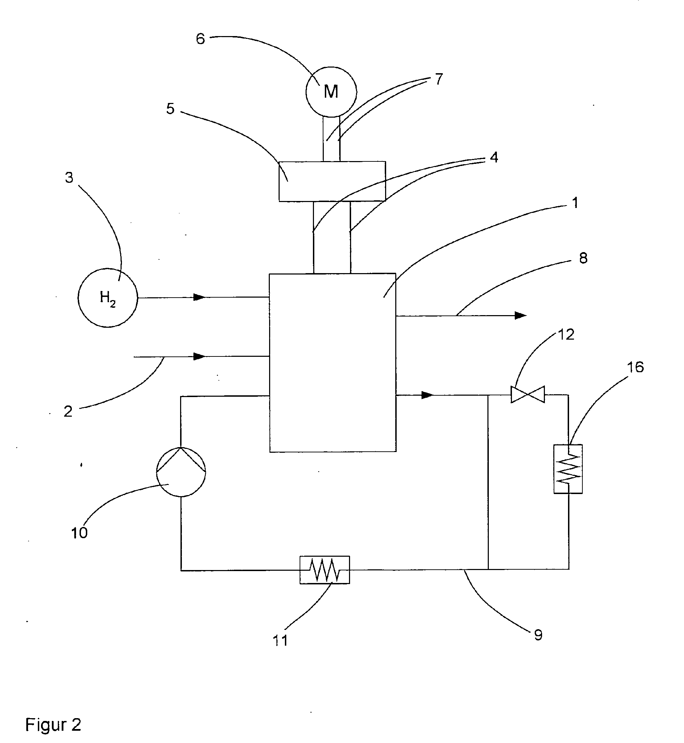

Ein weiteres Ausführungsbeispiel ist in Figur 2 gezeigt. Die Bezeichungen sind mit denen von Figur 1 identisch. Anstatt durch den Wärmetauscher 13 Luft zu erwärmen, wird die Kühlflüssigkeit direkt zur Beheizung des Bedienplatzes mittels des Heizelements 16 verwendet. Hierzu kann der heiße Flüssigkeitsstrom beispielsweise durch Boden oder Wände einer Fahrerkabine geleitet werden, um so den Wärmeübergang zum Bedienplatz zu erreichen. Auch die direkte Beheizung eines Fahrersitzes oder von Bedienlementen ist denkbar. Die Regelung der Heizleistung erfolgt in diesem Fall nach dem Stand der Technik für Warmwasserheizungen, beispielsweise durch das Ventil 12.

Selbstverständlich ist auch eine Kombination der beschriebenen Möglichkeiten zur Versorgung der Heizvorrichtung mit Wärme möglich.

## Patentansprüche

1. Flurförderzeug mit einem elektrischen Antrieb (6), einem Brennstoffzellensystem (1) und einer Heizvorrichtung für einen Bedienplatz **dadurch gekennzeichnet, dass** die Heizvorrichtung durch die beim Betrieb des Brennstoffzellensystems (1) entstehende Wärme betreibbar ist.

2. Flurförderzeug mit einem elektrischen Antrieb (6), einem Brennstoffzellensystem (1) und einer Heizvorrichtung für einen Bedienplatz nach Anspruch 1, **dadurch gekennzeichnet, dass** als Wärme übertragendes Medium eine Flüssigkeit, insbesondere Wasser, verwendet wird.

3. Flurförderzeug mit einem elektrischen Antrieb (6), einem Brennstoffzellensystem (1) und einer Heizvorrichtung für einen Bedienplatz nach Anspruch 1 oder 2, **dadurch gekennzeichnet, dass** als Wärme übertragendes Medium ein Gas, insbesondere Luft, verwendet wird.

4. Flurförderzeug mit einem elektrischen Antrieb (6), einem Brennstoffzellensystem (1) und einer Heizvorrichtung für einen Bedienplatz nach einem der Ansprüche 1 bis 3, **dadurch gekennzeichnet, dass** als Wärme übertragendes Medium das Abgas der Brennstoffzelle (1) verwendet wird.

5. Flurförderzeug mit einem elektrischen Antrieb (6), einem Brennstoffzellensystem (1) und einer Heizvorrichtung für einen Bedienplatz nach einem der Ansprüche 1 bis 4, **dadurch gekennzeichnet, dass** mindestens ein Bedienplatz durch die Heizvorrichtung beheizbar ist.

6. Flurförderzeug mit einem elektrischen Antrieb (6), einem Brennstoffzellensystem (1) und einer Heizvorrichtung für einen Bedienplatz nach einem der Ansprüche 1 bis 5, **dadurch gekennzeichnet, dass** mindestens ein Bedienelement, insbesondere eine Lenkvorrichtung, beheizbar ist.

7. Flurförderzeug mit einem elektrischen Antrieb (6), einem Brennstoffzellensystem (1) und einer Heizvorrichtung für einen Bedienplatz nach einem der Ansprüche 1 bis 6, **dadurch gekennzeichnet, dass** mindestens ein Fahrersitz beheizbar ist.

8. Flurförderzeug mit einem elektrischen Antrieb (6), einem Brennstoffzellensystem (1) und einer Heizvorrichtung für einen Bedienplatz nach einem der Ansprüche 1 bis 7, **dadurch gekennzeichnet, dass** der Bedienplatz als Fahrerkabine ausgebildet ist.
